# EUROPEAN PATENT SPECIFICATION

(11) **EP 4 639 305 B1**
(45) Date of publication and mention of the grant of the patent: **14.10.2026**
(21) Application number: 23813903.4
(22) Date of filing: 20.11.2023
(51) Int. Cl.: G05D 1/224, G05D 1/229, G05D 1/246

(54) **METHOD AND SYSTEM FOR DEFINING A LAWN CARE AREA**
VERFAHREN UND SYSTEM ZUM DEFINIEREN EINES RASENPFLEGEBEREICHS
PROCÉDÉ ET SYSTÈME PERMETTANT DE DÉFINIR UNE ZONE DE SOINS DE PELOUSE

(30) Priority: 19.12.2022 SE 2251486
(43) Date of publication of application: 29.10.2025
(73) Proprietor: Husqvarna AB, 561 82 Huskvarna (SE)
(72) Inventor: ALEXIUSSON, Mikael, 561 82 Huskvarna (SE); SUDARSANAM, Sriram, 561 82 Huskvarna (SE); LAGERCRANTZ, Gustaf, 561 82 Huskvarna (SE); SIMONSSON, Johan, 561 82 Huskvarna (SE); GRECH, Nigel, 561 82 Huskvarna (SE)
(86) International application number: PCT/SE2023/051170
(87) International publication number: WO 2024/136716

(56) References cited:
- US-A1- 2017 201 617
- US-A1- 2020 306 983
- US-A1- 2021 223 784

## Description

### Technical field

The present disclosure relates to a method for defining geographic data corresponding to the work area of a robotic work tool, such as a robotic lawnmower wherein optical recording of an area takes place using a LIDAR sensor.

### Background

In most robotic lawnmowers that have been made available so far, a work area is defined by being surrounded by a buried cable. An electric signal is applied on this cable, typically by the robotic lawnmower's charging station, and the robotic lawnmower can thereby detect that it is about to cross the cable, and thus change its heading so as to remain within the work area. Installing and maintaining such a cable is inconvenient and the cable only provides an outer boundary, not controlling the robotic lawnmower's behavior while inside the work area.

Providing the lawnmower with a relatively exact navigation system such as based on real-time kinematics, RTK, makes it possible to dispense with the boundary cable, instead programming a virtual border into the memory of the robotic lawnmower. This also allows the programming of certain rules within the outer boundary, such as avoiding flower beds or scheduling mowing within the area in specific preferred ways, for instance.

However, the robotic work area will still need to be established. This may be accomplished for instance by leading the robotic lawnmower along its intended work area's outer boundary so as to let the lawnmower record the corresponding positions for future use, a so-called walk-the-dog method. Alternatively, geographic data could be downloaded from a GIS system and could be used to establish a work area that is subsequently transferred to the robotic lawnmower. However, both those methods are time consuming. GIS data is not always available, and programming of a work area using such data is usually done remotely from the work area itself, which makes the programming less intuitive. Also, detail may be lacking, especially with regard to different types of vegetation and intended uses for different parts of the work area, for instance.

A general problem is therefore to provide an easy and intuitive way of establishing a work area with great detail while having direct access to the work area itself.

US-2020/0306983-A1 describes a method for controlling a mobile robot. In the method, geometry information is acquired using LIDAR and images of the outside of the robot main body are acquired using a camera. Odometry information is created based on the geometry information. Feature matching between images acquired by the camera is performed based on the odometry information to determine the current location of the mobile robot.

### Summary

One object of the present disclosure is therefore to accomplish a method for generating geographic data corresponding to the work area of a robotic work tool that is easy to use, with access to the work area itself, and providing significantly detailed information.

This object is achieved by means of a method as defined in claim 1. More particularly, the method includes carrying out the optically recording of the area, using a mobile device comprising a camera with an optical axis and a LIDAR sensor, wherein the recording produces a sequence of composite data including position- and orientation data of the mobile device, an image of a portion of a work area, and a distance between the mobile device and said portion of the work area along said optical axis. At least one image in the sequence of composite data includes a feature having a known position. Said feature is the robotic work tool, and the robotic work tool communicates its position to the mobile device, the work tool being present in at least two non-consecutive images in said sequence and moves in between capturing those images, communicating its position before and after the move. A map is created by combining the sequence of recorded composite data. The method further includes defining at least one border in the map to produce a rule-defining work area, and transferring the rule-defined work area to a robotic work tool.

In this way, a user can easily and quickly establish a work area by moving around a garden, for instance, and create an accurate and detailed map. By establishing borders in that map a work area can be defined, which is transferred to the robotic work tool which may then begin operation using the defined work area.

The map may be presented on the mobile device providing a user interface which then receives said at least one border as a user input.

The border or other rule in the map, making up the rule-defining work area may include one or more of: an outer border, and inner border, a passage, and a sub-zone.

Areas of the map may be segmented into different classes based on content in the corresponding images.

The present disclosure also considers a robotic work tool system, comprising a robotic work tool and a mobile device, configured to define a robotic work tool work area. The mobile device comprises a camera with an optical axis, and a LIDAR sensor, and is configured to optically record an area, producing a sequence of composite data including position- and orientation data of the mobile device, an image of a portion of an intended work area, and a distance between the mobile device and the said portion. At least one image in the sequence of composite data may include a feature having a known position. Said feature is the robotic work tool, which is configured to communicate its position to the mobile device and is present in at least two non-consecutive images in the sequence and being configured to move in between the capturing of those images, communicating its position before and after the move The system is configured to create a map by combining the sequence of recorded composite data and to define at least one border or other rule in the map, thereby producing a rule-defining work area. The rule-defined work area may be transmitted to robotic work tool, which then operates accordingly. This method provides corresponding advantages as the method above and may be varied accordingly.

The present disclosure also considers a corresponding data processing equipment comprising at least one processor and memory, configured to carry out the method as defined above.

The present disclosure also considers a computer program product comprising instructions which, when the program is executed on a processor, carries out the method as defined above.

The present disclosure also considers a computer-readable storage medium having stored thereon the above computer program product.

### Brief description of the drawings

Fig 1 illustrates a work area to be formed.
Fig 2 illustrates composite data captured by a mobile device.
Fig 3 shows images taken of the work area in fig 1
Fig 4 illustrates the assembling of the images in fig 3 into a map.
Fig 5 illustrates an alternative way of recording a work area.
Fig 6 shows a recorded and assembled map.
Fig 7 illustrates a flow chart for a method of recording and editing a work area.
Fig 8 illustrates nodes in the system.
Fig 9 illustrates a detail of the flow chart in fig 7.

### Detailed description

The following outlines the method where a map corresponding to a work area is produced. A user activates a mobile device, typically a smart phone equipped with a LIDAR sensor. One example of such a smart phone is IPHONE 13 PRO.

The user begins to scan the area desired as the work area, and typically areas adjoining thereto. As will be discussed, it may be suitable to begin the scanning with images containing the robotic work tool. If the robotic work tool at the same time reports its position either directly to the mobile device, via a third node to the mobile device or to the third node for future use, the position data of the robotic work tool can be used to enhance the position detection of the mobile device and, as will be discussed, the accuracy of the generated map.

The mobile device detects its position using for instance a satellite navigation system such as GPS, Glonass, etc. It should be noted that the accuracy of such unenhanced satellite navigation systems is relatively low. However, this can be compensated for as will be described. If a more accurate means for navigation is available, such as RTK, this may of course be used instead.

In addition to the position, the mobile device senses its orientation using accelerometers or the like so that an estimate of the optical axis direction of the mobile device's camera can be obtained. In the same way, the roll angle of the mobile device in relation to the optical axis can be determined. Ideally, this data in combination with the image produced simultaneously, would be sufficient to record a map where consecutive images are stitched together and are being tagged with corresponding positions.

Due to the relatively low accuracy of an unenhanced satellite navigation system however, the mapping of positions in the map generated by the recorded consecutive images and actual positions will be low. In the present disclosure, this problem is reduced by using a mobile device provided with a light detection and ranging, LIDAR, function and by recording, in the sequence, a position that is recognizable and has a known position determined with a higher accuracy.

To start with, LIDAR determines ranges by targeting an object with a laser beam and measuring the time for light reflected by the object to return to the receiver. In this way, a digital 3D representation of an area imaged by the mobile device's camera can be accomplished. This measurement has a very high accuracy.

Secondly, during the recording of the composite data, a recognizable object with a position determined with high accuracy is detected at least once. This object may typically be the robotic work tool itself. Typically, the robotic work tool will need to navigate with high precision within the work area once this work area has been established. Therefore, high-accuracy position detection will likely in any case need be provided in the robotic work tool. This may comprise a real-time kinematics, RTK, unit that enhances a satellite navigation system data by means of a reference signal received from another satellite navigation receiver located at a known position. RTK navigation is well known per se. Alternatives to RTK for high accuracy navigation could include inertia measurement units, IMU, as well as local navigation systems based on optic features or ultrasound for instance, optionally in combination with satellite navigation.

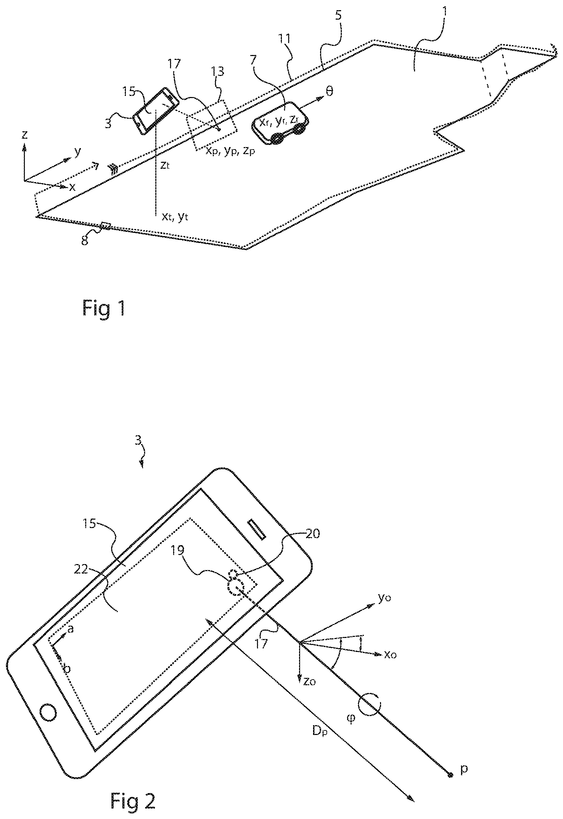

Fig 1 illustrates a work area 1 being defined by means of a mobile device 3. A robotic work tool 7 is to operate in the work area 1, typically intermittently being charged by a charging station 8. An outer boundary 5 is to be formed, and optionally other objects in the area may be registered to which rules may be associated as will be shown.

The user holding the mobile device 3 follows a trace 11, at least along the intended outer boundary 5, producing a series of images of corresponding areas 13 which simultaneously are visible on a mobile device display 15, allowing the user to verify that the correct area is being recorded.

While recording those images 13, the mobile device 3 simultaneously records other data to be associated with the image to form composite data. To start with the position xt, yt, zt of the mobile device 3 is detected, typically by means of satellite navigation or similar, as mentioned. As mentioned, this position-detection may be relatively coarse, but may be enhanced as will be discussed.

Further, as illustrated in fig 2, the orientation xₒ, yₒ, zₒ of the mobile device 3 is detected, typically the orientation of the optical axis 17 of its camera 19. Additionally, the roll φ of the mobile device 3 in relation to the optical axis 17 may be detected. These detections may be made by means of accelerometers internal in the mobile device 3.

Finally, detection of the distance Dₚ between the mobile device 3 and points p in the imaged area 13 may be detected by means of a LIDAR in the mobile device 3, as mentioned.

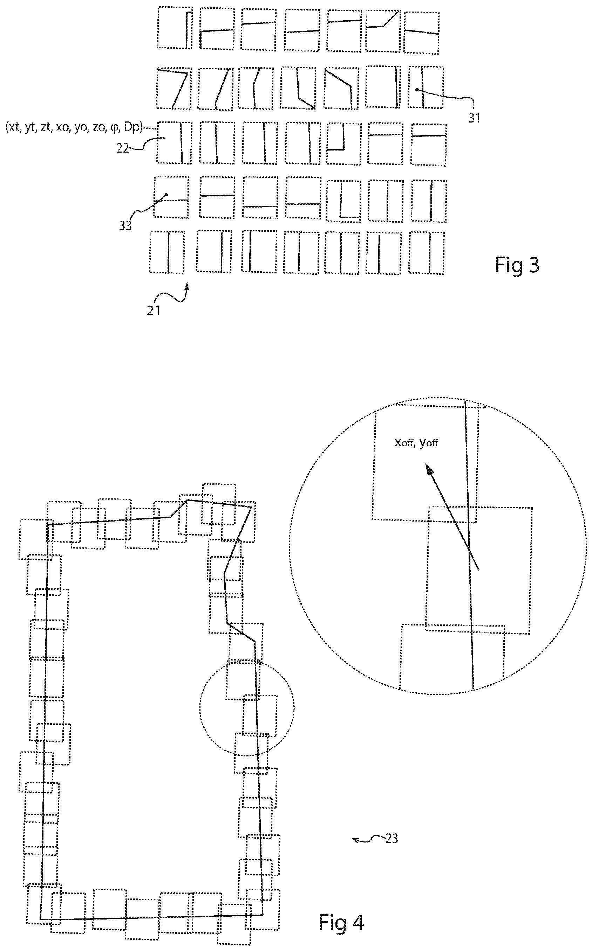

By recording composite data in the form of images and corresponding sensor data along the trace 11 in fig 1, a set 21 of images is accomplished such as is very schematically outlined in fig 3. Each image 22 may be associated with corresponding position- and orientation data xt, yt, zt, xo, yo, zo, φ of the mobile device, and a distance Dp as measured with the LIDAR.

By using the recorded composite data, those images can be stitched together to form a map 23 as shown in fig 4, describing the outer boundary of the work area 1 of fig 1. Thanks to the data associated with each image, the relative offset x_{off}, y_{off} between the images in the set can be determined, such that they may be assembled to form the map 23.

This map 23 can be used to edit the work area boundary to some extent, and given that the positions in the map are sufficiently accurately mapped to the corresponding positions detected by the robotic work tool's sensors, the robotic work tool can operate in accordance with the rules defined in this map, staying within the work area and optionally processing the work area in a desired manner.

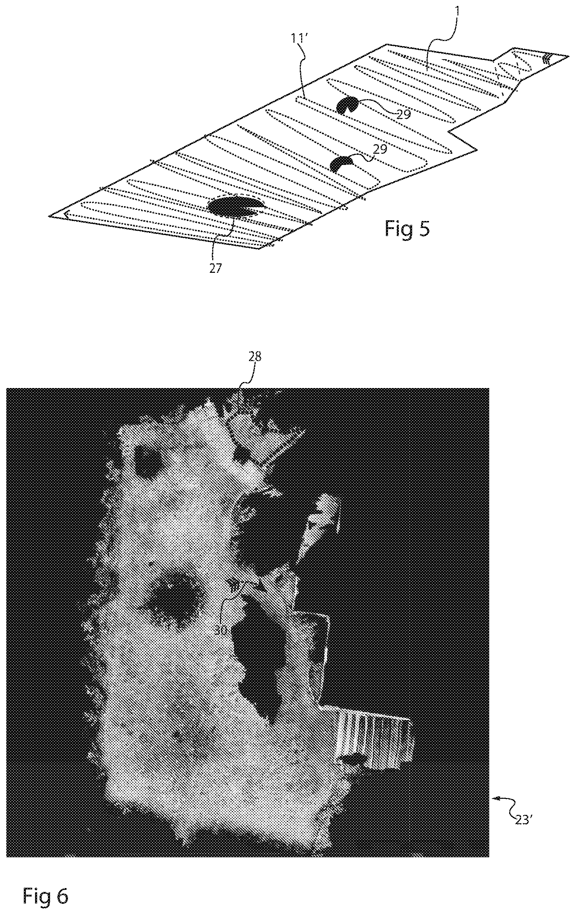

Fig 5 illustrates an alternative way of recording the work area where more or less the entire work area is recorded, rather than just the outer boundary. For instance, this may be done with the meandering trace 11' illustrated. In addition to the outer boundary data of the map in fig 1, such a recording may create a complete or almost complete map 23', as illustrated with an actual example in fig 6. In addition to keeping the robotic work tool inside the work area, this allows the user to define rules on how the robotic work tool 7 is to operate inside the work area. For instance, an exclusion zone 27, cf. fig 3, may be defined in the work area, where a pond is located. Other objects 29 requiring special operation or avoidance, such as trees, may be marked as well, and the work area may be divided into different zones or sub-areas 28, cf. fig 6 which are to be treated differently. If the work area contains sub-areas that are hard to reach by a more or less random movement of the robotic work tool, for instance areas that are reached via a narrow passage, such subareas can be marked as such, and the passage 30 thereto can be added into the map, such that the robotic work can access and process those subareas too regularly.

Two considerations in the present disclosure improves the assembling of images into a map and that maps relation to the actual geography of the physical work area. Returning to fig 4, the assembling of the images into a map could theoretically be made based only on the mobile device's position detection using satellite navigation and the accelerometers in the mobile device determining its orientation. However, using the LIDAR substantially improves precision by regularly or continuously providing a comparatively very exact distance measurement which can be used to correct errors in orientation and more importantly position of the mobile device. Thus moving the mobile device in the space above the work area will in most cases result in a change in the distance to the imaged area that can be determined with a much higher precision than the dedicated positioning sensor. The same applied to the sensing of orientation although that sensing is usually done at a higher level of precision.

The second consideration relates to the generated maps relation to the real-world work area. Even if the offset between images forming the map can be determined with great precision as outlined above, each position in the work area map will map to a real-world work area position with a precision limited by the mobile device's positioning sensors. If that positioning is based solely on regular satellite navigation, this may result in an offset between the work area map and the real-world work area of several centimeters or even decimeters. This means that the navigation of the robotic work tool will be incorrect, even if for instance RTK allows it to navigate with millimeter precision. Basing this navigation on a map with a significant offset still impairs the functionality.

In the present disclosure, this is dealt with by detecting at least one feature with a known position 31 when recording the work area as described above, as illustrated with reference to fig 3. Presuming that the mobile device can detect North or another reference direction, this is sufficient to align positions in the map with the real-world positions. Alternatively, the feature 31 itself may indicate a known reference direction that can be extracted from the image.

Another possibility is to detect known positions 31, 33 at two or more separate locations in the recorded area.

It would be possible to provide dedicated position indicating features 31, 33 on the work area 1, such as beacons that are placed in known locations. However, with reference to fig 1, in the present disclosure the known positions may also be provided by the robotic work tool 7 itself. The robotic work tool, if provided with RTK positioning, can determine its position xᵣ, yᵣ, zᵣ with very high accuracy and report the determined position either to the mobile device or to another node where processing takes place as will be discussed.

In addition to its position, the robotic work tool 7 may report its heading θ. This may be provided by a dedicated feature, such as an electronic compass. in the robotic work tool. Alternatively, the robotic work tool 7 may move straight forward, and its heading may be calculated from the corresponding change in position. The mobile device 3 may then detect the robotic work tool's heading in the image by means of image recognition. If the heading is reported, the reference direction can be resolved with only one image capturing the robotic work tool 7.

Alternatively, the heading may be resolved by detecting the robotic work tool 7 or another object with known positions twice during the recording which allows the direction North, or another reference direction, to be determined for the generated map. It should be noted that other ways of resolving a reference direction are conceivable, for instance detecting shadows in sunny weather and resolving the reference direction using a time stamp and astronomical data.

With access to the above data, an accurate map of the work area can be generated, having position data matching the position that the robotic work tool will detect at corresponding positions.

This map can be provided with rule-based features regarding how the robotic work tool is intended to move and operate in the work area, such as an outer boundary that should not be crossed and other features. The map is then transferred to the robotic work tool that operates correspondingly.

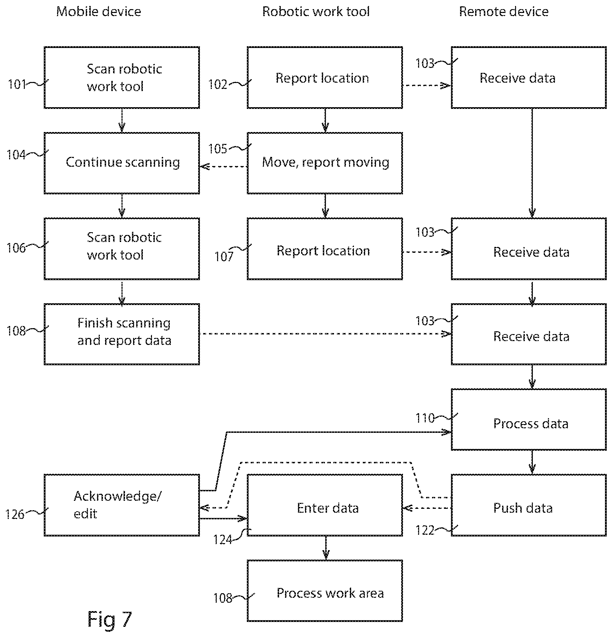

A method according to an example of the present disclosure is now described with reference to the flow chart of fig 7.

The method begins with the user beginning scanning 101 the area, typically his garden, with the mobile device 3. Initially, the robotic work tool 7 may be scanned, which is stationary at this point. At the same time, the robotic work tool 7 reports 102 its location to the mobile device 3 or to a remote device 50 which receives 103 the same. This may also be done earlier or later; it is not necessary that a known position is scanned at the beginning.

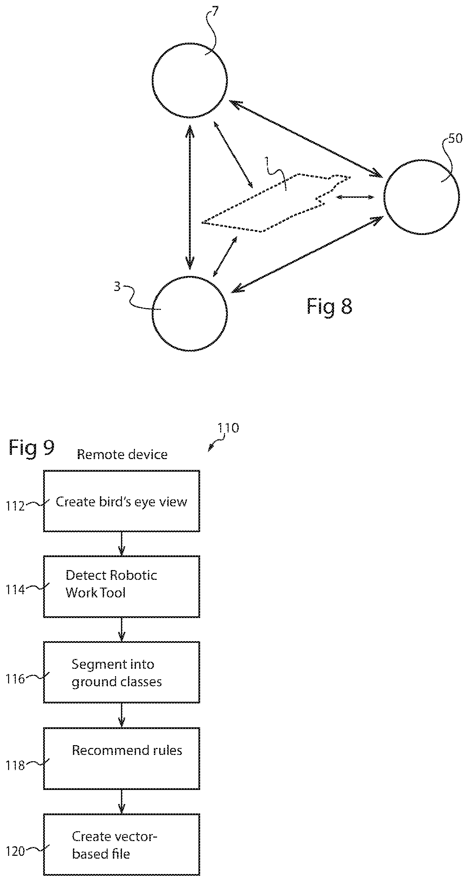

Briefly, with reference to fig 8, a system may include the remote device 50 which is in communication with, but separate from, both the robotic work tool 7 and the mobile device 3. This remote device 50 may be in different forms. For instance, it may be a personal computer that user has access to, or a partition of a cloud service.

The function of the remote device 50 may be assembling and formatting a map based on data from the mobile device and optionally the robotic work tool. The remote device 50 may further allow the user to enter and edit rules for how the recorded work area is processed, however those rules may also be wholly or partly generated by the remote device 50 itself, or the remote device may create a proposal of a set of rules that the user may edit or simply acknowledge. Once a map corresponding to the work area 1, with associated rules, has been accomplished, it may be pushed to the robotic work tool 7. It should be noted though that the function of the remote device 50 may wholly or partly be carried out in the mobile device 3 depending on the latter' processing capacity, so the remote device 50 can be considered optional. However, editing rules of a map on a personal computer screen is considered convenient.

Returning to fig 7, the user continues scanning 104 the work area, for instance the garden, covering the periphery thereof, parts of the work area 1 or the entirety thereof.

While this takes place, the robotic work 7 tool may move 105 to a new location. While moving, the robotic work tool 7 may inform the mobile device 3 or remote device 50 that it is moving so as to ignore any scans including the robotic work tool 7 at this point.

Then, the mobile device 3 may scan 106 the robotic work tool 7 again, although as mentioned this is not necessary if North or another reference direction can be resolved with only one scan. At the same time, the robotic work tool 7 is stationary and again reports 107 its location, for instance determined using RTK. As an alternative, the charging station 8 can be scanned and identified in the same way as the robotic work tool 7. If the charging station is used as a fixed point in an RTK system, it will have known position defined with high accuracy.

The mobile device 3 finishes scanning 108 the desired area, and creates an object file, including the recorded images and corresponding LIDAR and accelerometer data, together forming composite data. This data is sent to the remote device 50 which receives the same. Alternatively, the data may be streamed to the remote device 50 while being recorded. Data corresponding to the robotic work tool identity or model may also be sent to the remote device to facilitate pairing with position data received from the robotic work tool 7.

The remote device 50 processes 110 received data and locations as will be described with reference to fig 9. As mentioned, the composite data may also be processed in the mobile device 3 if it has sufficient processing capacity.

To start with, referring to fig 9, a bird's eye view of the work area is created 112 from the above-mentioned object file. This is done by rotating each object to azimuth view and assembling the images by means of LIDAR/accelerometer data and/or by image recognition between adjacent images until a bird's eye view of the entire recorded portion of the work area is formed. This outputs a graphic format file, e.g. png file, illustrated with the example in fig 6.

Then, the robotic work tool 7, or other object with known coordinates, is detected 114 in the work area image. Typically, as outlined above, the robotic work tool will be present at two locations of the image, e.g. at 31 and 33 as shown in fig 3. This may be detected using per se known object recognition models which are trained to visually recognize the robotic work tool 7. Machine-learning techniques may readily be used to make an algorithm capable of detecting a robotic work tool and its heading. It is possible to modify the robotic work tool 7 so as to simplify this process, for instance applying an easily recognizable mark on top of the robotic work tool 7, such that the robotic work tool 7 and optionally its heading can be more easily detected. A QR code or bar code could be used to this end, and also make it possible to easily verify the identity of the robotic work 7 tool if a plurality of robotic work tools are used in the same work area.

Typically, the output may be a file matching the above-mentioned graphic format file where pixels including the robotic work tool are marked with "1":s while the remainder of the pixels are "0":s. It may be verified in additional steps that the detection is correct.

In a subsequent step, the image data may be analyzed to detect 116 different ground classes in the image, such as, lawn, gravel, asphalt, concrete, bushes, trees, etc. Although the latter two are strictly not regarded as part of the ground they may be treated as such in the stitched azimuth view. This step aims at defining a ground class for all or most pixels in the image. Such segmentation algorithms are well known per se and not discussed further. In a simple example, it would be enough to detect all green areas as 'lawn' and residual areas as 'other'. Also, the segmentation into ground classes is not necessary. The robotic work tool 7 may locally detect that it is passing over an asphalt area and decide to move on without processing it.

In the next step, pixels in the image are mapped 120 onto actual physical coordinates in the work area 1. This step generates, based on the image and on the previously stored robotic work tool positions, a set of attribute-value pairs that map pixels to coordinates, for instance in the form of a SVG (Scalable Vector Graphics) file with included position mapping information. In this instance, the LIDAR measurements carried out in the scanning process provides very exact pixel-to-pixel distance measurements. At the same time, the detection of the robotic work tool 7 or other position indicator, together with the associated position data reported by the robotic work tool 7 or otherwise known by the system, allows straightforward calculation of which coordinate each pixel in the image maps on. Thus, this step can output a data structure such as exemplified above with a position associated with each pixel. Additionally, the ground class data determined in the previous step could be entered in the data structure as well.

With this information at hand, it is possible to start editing rules for the work area. This could be done manually in a user interface associated with the remote device.

Another option, as indicated in fig 9, is to use an algorithm to create 118 a set of rules for processing the area. Typically, this will include an outer boundary that should not be crossed. Areas inside the work area that are prohibited could be defined as well, for instance a flower bed or swimming pool.

Optionally further, the work area could be divided into multiple sub areas that could be processed one after another in a predetermined order with allowed processing times that are proportional to their respective sizes, for instance.

It may be advantageous to create a vector-based file such as an SVG-file based on the image and the rules that the robotic work tool can use as basis for navigation decisions. Anchor points in this file may correspond to actual positions in the work area.

Returning to fig 7, data thus produced can then be pushed 122 to the robotic work tool 7 and optionally to the mobile device 3. The robotic work tool 7 may enter 124 this data into its controller. The mobile device 3 may present the data to the user that may acknowledge the data or edit rules in it 126. If the user edited the data in the remote device as a part of the rule defining process, this is of course superfluous. It is also possible to define all rules in the mobile device 3 at this point.

If the user approves with the work area instructions, this may be communicated to the robotic work tool that can begin processing the work area. If the user chooses to edit the data, this may be sent back to the remote device which repeats parts of the processing 110 to produce new data that is pushed to the robotic work tool 7 and the mobile device 3. It is also possible to push the edited data directly from the mobile device 3 to the robotic work tool 7.

The robotic work tool processes 108 the thus established work area 1 in accordance with the rules defined.

The present invention is not limited to the above-described examples and can be altered and varied in different ways within the scope of the appended claims.

## Claims

1. A method for generating geographic data corresponding to the work area (1) of a robotic work tool (7), wherein optical recording of an area takes place using a LIDAR sensor (20), comprising the steps of:
- carrying out the optical recording (101) of the area, using a mobile device (3) comprising a camera (19) with an optical axis (17) and a LIDAR sensor (20), wherein said recording produces a sequence (21) of composite data including position- and orientation data (xt, yt, zt, xo, yo, zo, φ) of the mobile device (3), an image (22) of a portion of a work area, and a distance (Dp) between the mobile device (3) and said portion of the work area along said optical axis (17), and wherein at least two images in said sequence of composite data include a feature (31, 33), said feature (31, 33) being the robotic work tool (7) having known positions at the times when said images are acquired, the robotic work tool (7) being present in at least two non-consecutive images in said sequence and moving in between the capturing of those images, communicating its positions before (102) and after (107) the move;
- creating (110) a map (23) by combining the sequence (21) of recorded composite data;
- defining (118;126) at least one border (5, 27) or other rule in the map to produce a rule-defined work area, and
- transferring (122) the rule-defined work area to said robotic work tool (7).

2. Method according to claim 1, wherein said map is presented on said mobile device (126) providing a user interface which receives said at least one border as a user input.

3. Method according to claim 1 or 2, wherein said at least one border (5, 27) or other rule in the map, making up the rule-defined work area includes one or more of: an outer border (5), and inner border (27), a passage (30), and a sub-zone (28).

4. Method according to any of the preceding claims, wherein areas of the map are segmented (116) into different classes based on content in the corresponding images.

5. Data processing equipment comprising at least one processor and memory, configured to carry out the method of any of the claims 1-4.

6. Data processing equipment according to claim 5, further comprising a robotic work tool system, said system comprising a robotic work tool (3) and a mobile device (3), configured to define a robotic work tool work area (1), wherein optical recording of an area takes place using a LIDAR sensor (20), wherein:
the mobile device (3) comprising a camera (19) with an optical axis (17), and the LIDAR sensor (20), and being configured to optically record an area, producing a sequence (21) of composite data including position- and orientation data (xt, yt, zt, xo, yo, zo, φ) of the mobile device, an image (22) of a portion of an intended work area, and a distance (Dp) between the mobile device and said portion of the intended work area along said optical axis (17), and wherein at least one image in said sequence of composite data includes a feature (32, 33) having a known position, the feature (31, 33) being the robotic work tool (7), the robotic work tool being configured to communicate its position (102) to the mobile device and work tool (7) being present in at least two non-consecutive images in said sequence and being configured to move in between capturing those images, communicating its position before (102) and after (107) the move;
the system being configured to create a map (23) by combining the sequence of recorded composite data and defining at least one border (5, 27) or other rule in the map to produce a rule-defined work area, and to transfer the rule defined work area to said robotic work tool (7).

7. A computer program product comprising instructions which, when the program is executed on a processor, carries out the method according to any of the claims 1-4.

8. A computer-readable storage medium having stored thereon the computer program product of claim 7.

## Patentansprüche

1. Verfahren zum Erzeugen von geografischen Daten, die dem Arbeitsbereich (1) eines Roboterarbeitswerkzeugs (7) entsprechen, wobei ein optisches Aufzeichnen eines Bereichs unter Verwendung eines LIDAR-Sensors (20) stattfindet, umfassend die Schritte:
- Durchführen des optischen Aufzeichnens (101) des Bereichs unter Verwendung einer mobilen Vorrichtung (3), umfassend eine Kamera (19) mit einer optischen Achse (17) und einen LIDAR-Sensor (20), wobei das Aufzeichnen eine Sequenz (21) von zusammengesetzten Daten produziert, die Positions- und Orientierungsdaten (xt, yt, zt, xo, yo, zo, φ) der mobilen Vorrichtung (3), ein Bild (22) eines Abschnitts eines Arbeitsbereichs und einen Abstand (Dp) zwischen der mobilen Vorrichtung (3) und dem Abschnitt des Arbeitsbereichs entlang der optischen Achse (17) einschließen, und wobei mindestens zwei Bilder in der Sequenz von zusammengesetzten Daten ein Merkmal (31, 33) einschließen, wobei das Merkmal (31, 33) das Roboterarbeitswerkzeug (7) ist, das zu den Zeitpunkten, wenn die Bilder erfasst werden, bekannte Positionen aufweist, wobei das Roboterarbeitswerkzeug (7) in mindestens zwei nicht aufeinanderfolgenden Bildern in der Sequenz vorhanden ist und sich zwischen dem Aufnehmen dieser Bilder bewegt, wobei es seine Positionen vor (102) und nach (107) der Bewegung kommuniziert;
- Erstellen (110) einer Karte (23) durch ein Kombinieren der Sequenz (21) von aufgezeichneten zusammengesetzten Daten;
- Definieren (118; 126) mindestens einer Grenze (5, 27) oder anderen Regel in der Karte, um einen regeldefinierten Arbeitsbereich zu produzieren, und
- Übertragen (122) des regeldefinierten Arbeitsbereichs an das Roboterarbeitswerkzeug (7).

2. Verfahren nach Anspruch 1, wobei die Karte auf der mobilen Vorrichtung (126) dargestellt ist, die eine Benutzerschnittstelle bereitstellt, die die mindestens eine Grenze als eine Benutzereingabe empfängt.

3. Verfahren nach Anspruch 1 oder 2, wobei die mindestens eine Grenze (5, 27) oder andere Regel in der Karte, die den regeldefinierten Arbeitsbereich bildet, eines oder mehrere einschließt von: einer äußeren Grenze (5), einer inneren Grenze (27), einem Durchgang (30) und einer Teilzone (28).

4. Verfahren nach einem der vorstehenden Ansprüche, wobei Bereiche der Karte basierend auf Inhalt in den entsprechenden Bildern in unterschiedliche Klassen segmentiert (116) werden.

5. Datenverarbeitungsausrüstung, umfassend mindestens einen Prozessor und Speicher, die konfiguriert sind, um das Verfahren nach einem der Ansprüche 1 bis 4 durchzuführen.

6. Datenverarbeitungsausrüstung nach Anspruch 5, ferner umfassend ein Roboterarbeitswerkzeugsystem, das System umfassend ein Roboterarbeitswerkzeug (3) und eine mobile Vorrichtung (3), die konfiguriert sind, um einen Roboterarbeitswerkzeugarbeitsbereich (1) zu definieren, wobei das optische Aufzeichnen eines Bereichs unter Verwendung eines LIDAR-Sensors (20) stattfindet, wobei:
die mobile Vorrichtung (3) eine Kamera (19) mit einer optischen Achse (17) und den LIDAR-Sensor (20) umfasst und konfiguriert ist, um einen Bereich optisch aufzuzeichnen, wobei eine Sequenz (21) von zusammengesetzten Daten produziert wird, die Positions- und Orientierungsdaten (xt, yt, zt, xo, yo, zo, φ) der mobilen Vorrichtung, ein Bild (22) eines Abschnitts eines vorgesehenen Arbeitsbereichs und einen Abstand (Dp) zwischen der mobilen Vorrichtung und dem Abschnitt des vorgesehenen Arbeitsbereichs entlang der optischen Achse (17) einschließen, und wobei mindestens ein Bild in der Sequenz von zusammengesetzten Daten ein Merkmal (32, 33) einschließt, das eine bekannte Position aufweist, wobei das Merkmal (31, 33) das Roboterarbeitswerkzeug (7) ist, wobei das Roboterarbeitswerkzeug konfiguriert ist, um seine Position (102) an die mobile Vorrichtung zu kommunizieren und das Arbeitswerkzeug (7) in mindestens zwei nicht aufeinanderfolgenden Bildern in der Sequenz vorhanden ist und konfiguriert ist, um sich zwischen dem Aufnehmen dieser Bilder zu bewegen, wobei es seine Position vor (102) und nach (107) der Bewegung kommuniziert;
das System konfiguriert ist, um eine Karte (23) durch das Kombinieren der Sequenz von aufgezeichneten zusammengesetzten Daten und das Definieren mindestens einer Grenze (5, 27) oder anderen Regel in der Karte zu erstellen, um einen regeldefinierten Arbeitsbereich zu produzieren, und um den regeldefinierten Arbeitsbereich an das Roboterarbeitswerkzeug (7) zu übertragen.

7. Computerprogrammprodukt, umfassend Anweisungen, die, wenn das Programm auf einem Prozessor durchgeführt wird, das Verfahren nach einem der Ansprüche 1 bis 4 durchführen.

8. Computerlesbares Speicherungsmedium, auf dem das Computerprogrammprodukt nach Anspruch 7 gespeichert ist.

## Revendications

1. Procédé destiné à générer des données géographiques correspondant à la zone de travail (1) d'un outil de travail (7) robotisé, dans lequel l'enregistrement optique d'une zone s'effectue à l'aide d'un capteur LIDAR (20), comprenant les étapes consistant à :
- mettre en œuvre l'enregistrement optique (101) de la zone, à l'aide d'un dispositif mobile (3) comprenant une caméra (19) avec un axe optique (17) et un capteur LIDAR (20), dans lequel ledit enregistrement produit une séquence (21) de données composites comportant des données de position et
d'orientation (xt, yt, zt, xo, yo, zo, φ) du dispositif mobile (3), une image (22) d'une partie d'une zone de travail, et une distance (Dp) entre le dispositif mobile (3) et ladite partie de la zone de travail le long dudit axe optique (17), et dans lequel au moins deux images dans ladite séquence de données composites comportent un élément (31, 33), ledit élément (31, 33) étant l'outil de travail (7) robotisé ayant des positions connues aux moments où lesdites images sont acquises, l'outil de travail (7) robotisé étant présent dans au moins deux images non consécutives dans ladite séquence et se déplaçant entre la capture de ces images, en communiquant ses positions avant (102) et après (107) le déplacement ;
- créer (110) une carte (23) par combinaison de la séquence (21) de données composites enregistrées ;
- définir (118 ; 126) au moins une limite (5, 27) ou une autre règle sur la carte afin de générer une zone de travail définie par la règle, et
- transférer (122) la zone de travail définie par la règle audit outil de travail (7) robotisé.

2. Procédé selon la revendication 1, dans lequel ladite carte est présentée sur ledit dispositif mobile (126) fournissant une interface utilisateur qui reçoit ladite au moins une limite en tant qu'entrée utilisateur.

3. Procédé selon la revendication 1 ou 2, dans lequel ladite au moins une limite (5, 27) ou une autre règle sur la carte, constituant la zone de travail définie par la règle, comporte l'un ou plusieurs parmi : une limite externe (5), une limite interne (27), un passage (30), et une sous-zone (28).

4. Procédé selon l'une quelconque des revendications précédentes, dans lequel des zones de la carte sont segmentées (116) en différentes classes sur la base d'un contenu des images correspondantes.

5. Équipement de traitement de données comprenant au moins un processeur et une mémoire, configuré pour mettre en œuvre le procédé selon l'une quelconque des revendications 1 à 4.

6. Équipement de traitement de données selon la revendication 5, comprenant en outre un système d'outil de travail robotisé, ledit système comprenant un outil de travail robotisé (3) et un dispositif mobile (3), configuré pour définir une zone de travail d'outil de travail robotisé (1), dans lequel l'enregistrement optique d'une zone s'effectue à l'aide d'un capteur LIDAR (20), dans lequel :
le dispositif mobile (3) comprenant une caméra (19) avec un axe optique (17) et le capteur LIDAR (20), et étant configuré pour enregistrer optiquement une zone, la production d'une séquence (21) de données composites comportant des données de position et d'orientation (xt, yt, zt, xo, yo, zo, φ) du dispositif mobile, une image (22) d'une partie d'une zone de travail prévue, et une distance (Dp) entre le dispositif mobile et ladite partie de la zone de travail prévue le long dudit axe optique (17), et dans lequel au moins une image dans ladite séquence de données composites comporte un élément (32, 33) ayant une position connue, l'élément (31, 33) étant l'outil de travail (7) robotisé, l'outil de travail robotisé étant configuré pour communiquer sa position (102) au dispositif mobile et l'outil de travail (7) étant présent dans au moins deux images non consécutives dans ladite séquence et étant configuré pour se déplacer entre la capture de ces images, en communiquant sa position avant (102) et après (107) le déplacement ;
le système étant configuré pour créer une carte (23) par combinaison de la séquence de données composites enregistrées et par définition d'au moins une limite (5, 27) ou d'une autre règle sur la carte afin de générer une zone de travail définie par la règle, et de transférer la zone de travail définie par la règle audit outil de travail (7) robotisé.

7. Produit-programme informatique comprenant des instructions qui, lorsque le programme est exécuté sur un processeur, mettent en œuvre le procédé selon l'une quelconque des revendications 1 à 4.

8. Support de stockage lisible par ordinateur sur lequel est stocké le produit-programme informatique selon la revendication 7.
